# EUROPÄISCHE PATENTSCHRIFT

(11) **EP 3 329 169 B1**
(45) Veröffentlichungstag und Bekanntmachung des Hinweises auf die Patenterteilung: **17.04.2019**
(21) Anmeldenummer: 16748261.1
(22) Anmeldetag: 14.07.2016
(51) Int. Cl.: F16L 55/46

(54) **VORRICHTUNG ZUM EIN- UND AUSSCHLEUSEN EINES MOLCHES IN EINE ODER AUS EINER ROHRLEITUNG**
APPARATUS FOR LAUNCHING AND RECEIVING A PIG INTO OR FROM A PIPELINE
DISPOSITIF D'INTRODUCTION D'UN RACLEUR DANS UNE CANALISATION ET D'EXTRACTION D'UN RACLEUR D'UNE CANALISATION

(30) Priorität: 31.07.2015 DE 102015112658
(43) Veröffentlichungstag der Anmeldung: 06.06.2018
(73) Patentinhaber: Rosen Swiss AG, 6370 Stans (CH)
(72) Erfinder: FILIPPOVITCH, Sergei, Richmond Hill, Ontario (CA)
(74) Vertreter: Wischmeyer, André
(86) Internationale Anmeldenummer: PCT/EP2016/001227
(87) Internationale Veröffentlichungsnummer: WO 2017/020991

(56) Entgegenhaltungen:
- EP-A1- 0 426 871
- EP-A1- 1 749 168
- EP-A1- 2 352 944
- EP-A1- 2 422 890
- WO-A1-99/50586
- GB-A- 2 196 715
- GB-A- 2 247 505
- US-A1- 2012 090 414

## Beschreibung

Die vorliegende Erfindung betrifft eine Vorrichtung zum Ein- und Ausschleusen eines Molches in eine oder aus einer Rohrleitung nach dem Oberbegriff des Anspruchs 1 sowie eine Anordnung mit einem eine Abzweigung ausbildenden Rohrleitungsstück nach dem Oberbegriff des Anspruchs 12.

Eine Vorrichtung zum Ein- und Ausschleusen eines Molches ist beispielsweise aus der US 2012/0090414 A1 bekannt. Dort weist eine ein in Form eines Y-Stücks ausgebildete Vorrichtung in den Figuren ein Ansatzstück auf, welches über Ventile einerseits an das Y-Stück und andererseits über eine Kicker-Line an die weitere Rohrleitung anschließbar ist bzw. angeschlossen ist. Ein Führungselement zur Aufnahme eines Molches kann über ein Antriebsmittel in Form einer Gewindestange in den primär durchströmten Bereich und zur Ausgabe bzw. Aufnahme des Molches hinein- bzw. aus diesem herausbewegt werden. In diesem Betriebszustand ist der Innenraum des Ansatzstücks aufgrund der Durchströmung mit dem über die Kicker-Line anströmenden Mediums in Fluidkommunikation mit der Rohrleitung. Aufgrund des Antriebsmittels muss somit ein weiterer Zugang in die Rohrleitung bzw. in das Y-Stück abgedichtet werden.

Bei dieser wie auch bei weiteren ähnlich aufgebauten Vorrichtungen aus dem Stand der Technik ist auch für die Kicker-Line eine zusätzliche Öffnung der Rohrleitung notwendig. Über diese wird der Molch rückwärtig mit Druck durch das in der Rohrleitung befindliche Medium beaufschlagt, um in die Rohrleitung einzufahren.

Neben dem mit der Öffnung eines zweiten Bereiches der Rohrleitung verbundenen Risiko baut die Vorrichtung nach der US 2012/0090414 A1 auch größer, was insbesondere bei in Industrieanlagen vorhandenen Rohrleitungssystemen problematisch sein kann. Gleichzeitig kann das Einfahren und Herausnehmen in bzw. aus der Leitung problematisch werden, wenn Führungselement und Innenwand des Y-Stücks keine sichere Abdichtung zum Molch bzw. zu dessen Disks und Cups ermöglichen. Durch zu hohe Druckverluste aufgrund von vorbeiströmendem Medium kann die Bewegung des Molchs nicht hundertprozentig gewährleistet werden.

Eine Vorrichtung nach dem Oberbegriff des Anspruchs 1 ist in der EP 2 352 944 A1 offenbart. Diese Vorrichtung sieht weder eine Kicker-Line noch eine sonstige Ausgestaltung zum Vorbewegen eines Molches aus der Vorrichtung in die Rohrleitung oder eine Rückführung aus der Rohrleitung vor und ist baulich insbesondere im Zusammenhang mit einer Wartungsvorrichtung aufwändig, mit der die Rohrleitung aufzuschneiden ist.

Es ist Aufgabe der vorliegenden Erfindung, einerseits das Ein- und Ausbringen eines Molches in eine Rohrleitung zu Inspektions- bzw. Reinigungszwecken zu vereinfachen, die permanent in der Vorrichtung installierte Vorrichtung kleiner bauen zu lassen und insbesondere die Vorrichtung prozesssicherer gestalten zu können.

Die Aufgabe wird gelöst durch einen Gegenstand nach Anspruch 1 sowie durch einen Gegenstand nach Anspruch 12. Vorteilhafte Ausgestaltungen der Erfindung sind den hierauf rückbezogenen Unteransprüchen sowie der nachfolgenden Beschreibung zu entnehmen.

Erfindungsgemäß sind in dem Innenraum eine in Längsrichtung des Führungselements sowie wenigstens ein entgegen dieser Richtung verlaufender weiterer Strömungskanal ausgebildet, die über zumindest einen Umlenkbereich miteinander verbunden und durch Überführung eines Verschlussteils in eine Einsatzposition in Fluidkommunikation mit einem in der Rohrleitung befindlichen Medium gelangen können, wobei insbesondere die Kassette die Strömungskanäle ausbildet. Mit einer solchen Ausbildung kann auf eine sogenannte Kicker-Line verzichtet werden. Die Strömung des in der Rohrleitung vorhandenen Fluids wird durch die Vorrichtung selbst geleitet, und zwar sowohl in eine Richtung, durch die ein in der Kassette befindlicher Molch angetrieben werden kann, wenn er aus der Vorrichtung eingeschleust wird, als auch in eine Richtung wenn er aus der Rohrleitung umgekehrt in die Vorrichtung ausschleust. Die beiden Strömungskanäle sind über einen Umlenkbereich miteinander verbunden. Dieser befindet sich vorzugsweise im Bereich des rückwärtigen Endes der Vorrichtung. So kann ein in die Vorrichtung und insbesondere in das Ansatzstück einfahrender Molch das vor ihm befindliche Medium in Richtung des Zugangs drücken, wobei das Medium allerdings im Umlenkbereich umgelenkt wird und dann vorzugsweise außerhalb einer Innenwand der Kassette zwischen Kassette und Außenwand der Vorrichtung wieder in entgegengesetzte Richtung strömt. Diese beiden Kanäle sind entsprechend mit dem stromabwärts bzw. stromaufwärts befindlichen Rohrleitungsinneren in Verbindung bringbar.

Durch die Dimensionierung der Kanäle kann die durch das Ansatzstück hindurchgehende Strömung beeinflusst werden. Insbesondere können durch die Vergrößerung des Innendurchmessers des Ansatzstücks bei gleichbleibender Größe der Kassette z.B. für das Einschleusen des Molches in die Rohrleitung günstigere Strömungsverhältnisse geschaffen werden.

Durch die Unterbringung der Strömungskanäle in der Vorrichtung selbst ist nur diese gegenüber der Umgebung abzudichten. Dies erhöht die Betriebssicherheit, es kann auf eine weitere, Fluid leitende Verbindung mit der Rohrleitung und/oder dem Rohrleitungsstück, die sogenannte Kicker Line, verzichtet werden.

Vorzugsweise weist die Vorrichtung einen Haupt-Strömungskanal auf, der insbesondere durch den Aufnahmebereich für den Molch ausgebildet wird und wenigstens einen, vorzugsweise mehrere Nebenkanäle, in denen das Medium in die entgegengesetzte Richtung strömen kann. Entsprechend kann die Anordnung der Nebenkanäle um den Hauptkanal herum erfolgen.

Durch die Überführung eines Verschlussteils in eine Einsatzposition, wobei die Bewegung des Verschlussteils mit einer Bewegung der Kassette vorzugsweise einhergeht, wird die Hauptströmung in der Rohrleitung in Richtung der Strömungskanäle der erfindungsgemäßen Vorrichtung umgelenkt und diese gelangen in Fluidkommunikation mit dem in der Rohrleitung befindlichen Medium. Das Verschlussteil befindet sich in der Einsatzposition somit in einer den Mediumfluß in der Rohrleitung unterbrechenden Position. Durch den Umlenkbereich erfolgt eine Umlenkung zwischen den Strömungskanälen und die Strömung kehrt sich innerhalb der Vorrichtung um.

Somit kann auf weitere Vorrichtungen zur Unterbrechung des Stromes, wie im Stand der Technik vorgesehene separate Ventile verzichtet werden und die Dichtheit der Rohrleitung inklusive der erfindungsgemäßen Vorrichtung ist nicht weiter gefährdet.

Dabei ist vorgesehen, dass das Ansatzstück ein in Längsrichtung des Ansatzstücks und in dem Innenraum bewegbares Führungselement zur Aufnahme des Molches aufweist. Dieses Führungselement kann das aus der US 2012/0090414 A1 im Y-Stück integrierte Führungselement ersetzen. Die direkt in die Pipeline installierte Technik ist somit einfacher gehalten. Die Anzahl der notwendigen Dichtungen ist reduziert, da keine Handhabe für etwaige Stellmittel aus dem Y-Stück herausgeführt werden müssen. Die Dichtheit des Y-Stücks ist verbessert, was zu verlängerten Beobachtungsintervallen führen kann. Die kostspielige und mit dem Führungselement technologisch aufwendigere Vorrichtung, die grundlegend durch das Ansatzstück ausgebildet ist, ist von der Pipeline entfernbar und kann gesichert aufbewahrt werden.

Das Führungselement ist über etwaige Stellmittel mit einem Mundstück bis in eine Einsatzposition in der Pipeline überführbar, was beispielsweise aufgrund einer ausreichend langen Ausbildung des Führungselements bzw. durch entsprechend lange Stellmittel ermöglicht werden kann.

Insbesondere ist das Führungselement als Kassette ausgebildet, die, betrachtet in Längsrichtung des Führungselements, einen in Umfangsrichtung geschlossenen Hohlkörper ausbildet. In Richtung einer Längsachse eines etwaigen Molches oder des Hohlkörpers betrachtet umschließt der Hohlkörper den Molch in Umfangsrichtung. Eine Abdichtung des Molches gegenüber der Kassette ist dann einfacherer zu realisieren als eine Abdichtung gegenüber einem Schlitten und der Vorrichtungswand, die nicht notwendigerweise flächenbündig in einander übergehende Oberflächen oder gemeinsam eine kreisrunde Querschnittform aufweisen. Zwar kann über die Länge der Kassette diese abschnittsweise auch Öffnungen in der Hohlkörperwand oder andere offene Strukturen bzw. Durchbrüche aufweisen, allerdings sind diese in Bereichen anzuordnen, die für einen Vortrieb des Molches aus der Kassette unschädlich sind und keine Bypässe erlauben.

Gleichzeitig wird die Problematik mangelnder Dichtung aufgrund der Innenwandgeometrie im Übergangsbereich des Y- bzw. S-Stücks in den primär von dem Fluidmedium durchströmten Bereich verringert. Während des Einsetzens in die Rohrleitung ist der Molch somit in genauer definierten Zuständen hinsichtlich einer Dichtungsanlage. Der Übergang in die Rohrleitung erfolgt somit prozesssicherer. Auch kann der Molch über das Führungselement aus der Einsatzposition im Ansatzstück heraus bis in eine Position dicht an dem im Regelbetrieb hauptsächlich durchströmten Bereich der Rohrleitung herangefahren werden, wobei der Molch in der Kassette nicht bewegt wird.

Erst in dem Moment, in dem das Medium den Molch von hinten anströmt und die sich aus dem Druck ergebende Vortriebskraft die Haftreibung in Fortbewegungsrichtung übersteigt, bewegt sich der Molch gegenüber der Kassette.

Vorzugsweise ist die Kassette somit mit einem zentralen Aufnahmebereich versehen, in dem der Molch an einer Innenwand des Hohlkörpers dicht angeordnet werden kann. Dieser vorzugsweise mit einem kreisrunden Querschnitt versehene Aufnahmebereich besitzt über die Innenwand des Hohlkörpers eine Form, die eine gut dichtende Anlage etwaiger Dichtscheiben des Molches insbesondere dadurch ermöglicht, dass sie dem freien Innendurchmesser der zu inspizierenden bzw. zu reinigenden Rohrleitung entspricht.

Vorzugsweise wird das Verschlussteil durch die Kassette selbst, insbesondere deren Mundstück, oder durch ein an der Kassette befestigtes Ventilteil ausgebildet. Somit wird durch die Bewegung der Kassette selbst in deren Einsatzposition hinein die Strömung unterbrochen. Die Kassette kann hierbei dergestalt ausgebildet sein, dass sie in den Bereichen, in denen sie in dem eigentlichen Durchgangsbereich für das in der Rohrleitung strömende Medium in Anlage mit Rohrleitungsteilen gelangt, Dichtungseigenschaften besitzt. Hierbei kann die Kassette endseitig mit Dichtmitteln versehen sein, um verbessert eine dichtende Anlage und eine Unterbrechung der Strömung der Rohrleitung bewirken. Es werden keine weiteren Umschaltmittel benötigt. Auch auf weitere Ventilanordnungen kann verzichtet werden. Durch die Bewegung der Kassette in eine Einsatzposition für den Molch, d.h. eine Position, aus der der Molch in die Rohrleitung einschleusen bzw. aus dieser ausschleusen kann, wird die Strömung unterbrochen bzw. in die von der Vorrichtung und insbesondere der Kassette ausgebildeten Strömungskanäle umgeleitet.

Die beiden Strömungskanäle können quer zur Längsachse des Ansatzstücks nebeneinander liegen, so dass neben einem insbesondere als Hauptströmungskanal ausgebildeten ersten Strömungskanal mehrere Nebenkanäle um diesen herum angeordnet sind. Somit lässt sich einerseits eine zentrale Durchführung für den Inspektionsmolch realisieren, andererseits sind durch die Verteilung des Drucks um den Hauptströmungskanal herum gleichmäßige Belastungen und ein geringerer Verschleiß einzelner Bereiche realisiert. Die Vorrichtung ist insgesamt besser abdichtbar und insgesamt auch prozesssicherer gestaltet.

Insbesondere ist die Kassette auf ihrer nach außen gerichteten Seite mit Stegen versehen oder weist andere Wandabschnitte auf, über die zumindest einer der Strömungskanäle ausgebildet wird. In Umfangsrichtung um beispielsweise den Hohlkörper der Kassette herum können somit in radialer Richtung betrachtet eine Reihe von flachen, nebeneinander liegenden Neben-Strömungskanäle geschaffen werden. Die Wand der Kassette, auf deren Innenseite ein Molch anliegen kann, weist somit auf ihrer Außenseite Mittel zur Ausbildung eines Strömungskanals auf, so dass die Konstruktion insgesamt einfach und platzsparend ausgebildet werden kann.

Eine funktionale und gleichzeitig günstige Ausbildung der Kassette ist dann geschaffen, wenn der Umlenkbereich durch wenigstens eine Ausnehmung der Kassette und insbesondere der Wand der Kassette ausgebildet wird, wobei die Ausnehmung insbesondere in einer zum Zugang gerichteten Hälfte der Kassette angeordnet ist. Hierbei wird die Kassette in ihrer Längsrichtung betrachtet in zwei Hälften unterteilt. Das kann allerdings je nach verwendeten Molchen auch bereits sinnvoll sein, die Ausnehmungen in einem anderen Bereich der Kassette anzuordnen. Relevant ist lediglich, dass bei passiv betriebenen Molchen die Ausnehmung für ein Einschleusen in die Rohrleitung so positioniert wird, dass eine für den Vortrieb verwendete Dichtscheibe (Cup) eines in der Kassette befindlichen Molches in Richtung der Rohrleitung durch das Medium gedrückt werden kann. Für ein Ausschleusen kann gemäß einer weiteren Vorrichtungsausbildung dann die Ausnehmung auch woanders angeordnet sein, allerdings wird in dem Moment, in dem die Dichtscheiben des Molches die Ausnehmung erreichen, die Dichtung zwischen Molch und Kassettenwand unterbrochen, so dass in diesem Moment der Molch seinen Vortrieb letztlich verliert. Die Ausnehmung sollte demnach soweit zum Zugang angeordnet sein, dass der Molch, wenn er zum Stillstand in der Kassette kommt, komplett aus der Rohrleitung bzw. der Pipeline entfernt ist. Ein unproblematisches Ein- und Ausschleusen ist in der Regel dann realisiert, wenn die Ausnehmung eher im letzten Drittel der Kassette in Richtung Zugang der Vorrichtung vorhanden ist. Es kann sich um eine oder mehrere in Umfangsrichtung in einer Wand der Kassette angeordnete Ausnehmungen handeln. Die Wand beispielsweise des Hohlkörpers der Kassette trennt dann Strömungskanäle, die eine Strömung in unterschiedliche Richtungen aufweisen kann.

Insbesondere ist die Ausnehmung so weit von dem zum Zugang weisenden Ende der Kassette angeordnet, dass in dem Moment, in dem durch das Erreichen der Ausnehmung(en) die Dichtung zwischen Dichtscheibe und Wandung der Kassette aufgehoben wird und der Molch letztlich zum Stehen kommt, er noch innerhalb der Kassette angeordnet ist.

Alternativ oder ergänzend kann der Umlenkbereich auch durch ein offenes Ende der Kassette ausgebildet werden.

Gemäß einer weiteren Ausbildung der Erfindung kann zum Bewegen der Kassette zumindest ein vorzugsweise als doppelt wirkender Hydraulikzylinder ausgebildetes Stellmittel vorgesehen sein. Ein solches, insbesondere länglich ausgebildetes Stellmittel ist platzsparend im Inneren der insbesondere zumindest im Wesentlichen zylindrischen Vorrichtung unterbringbar. Es kann in Umfangsrichtung betrachtet neben den (Neben-) Strömungskanälen angeordnet sein. Hierbei kann die Kassette eine Nullposition aufweisen, aus der diese über den oder die Stellmittel einerseits durch den Zugang aus dem Ansatzstück herausbewegbar und andererseits in Richtung der Rohrleitung bewegbar ist. Insbesondere sind zumindest zwei bezüglich einer Längsmittelachse auf gegenüberliegenden Seiten angeordnete Stellmittel vorhanden, durch die die Kassette in einer Befestigungsposition der Vorrichtung als Ansatzstück an beispielsweise ein Y- oder S-Stück in Richtung des hauptsächlich durchströmten Bereiches bewegen kann. Die Stellmittel können auch in langestreckten Ausbuchtungen eines ansonsten hohlzylindrischen Körpers vorhanden sein. Die Zylinder können über Zugangsöffnungen mit einem Hydraulikmedium versehen werden, welches über eine externe Hydraulikpumpe zugeführt werden kann. Vorzugsweise ist ein Teil der Kassette dergestalt mit einem gekrümmten Ende versehen, dass dieses sich in die Rohrleitung einschmiegt und einerseits die Strömung unterbrechen kann, andererseits einen glatten und vorzugsweise nahezu oberflächenbündigen Übergang in Richtung stromabwärts ermöglicht. Die hierbei von dem Mündungsstück der Kassette realisierte Krümmung, die aufgrund der schrägen Einführung in die Pipeline vorhanden sein sollte, weist vorzugsweise einen Krümmungsradius von rund 2,5 D (D = Durchmesser der Pipeline) auf, um eine gute Einführung des Molches zu ermöglichen.

Für die Anordnung der erfindungsgemäßen Vorrichtung nicht nur an ein gerade ansetzendes Y-Stück sondern auch an ein gebogenes Y-Stück oder ein S-Stück einer Rohrleitung kann die Kassette eine Mehrzahl von gelenkig aneinander angeordneten Kassettenstücken aufweisen, die insbesondere dichtend aneinander angeordnet sind und in der durch den Abzweig mit der Rohrleitung aufgespannten Ebene einen Freiheitsgrad besitzen, um die Krümmung des Ansatzstückes und/oder des gebogenen Y- bzw. S-Stückes nachvollziehen zu können. So kann entweder das Ansatzstück auch bei symmetrischen oder asymmetrischen Y-Stücken verwendet werden oder sogar selbst gekrümmt oder über gekrümmte Adapter an die Rohrleitung bzw. das jeweilige Verbindungsstück angeschlossen werden.

Bei den gelenkig aneinander angeordneten Kassettenstücken kann es sich beispielsweise um kugelschalenförmige Hohlteile handeln, die über mit einem Freiheitsgrad versehene Gelenke aneinander angeordnet sind und die aus verstärktem, flexiblem Polyurethan oder auch aus Metall bestehen können.

Sowohl die starre wie auch die flexible Kassette kann über insbesondere mit Rollen oder anderen Gleitmitteln versehene Distanzstücke zentriert und leichtgängig bewegbar im Ansatzstück gehalten werden.

Auf einer Unterseite der Vorrichtung ist vorzugsweise eine mit einer verschließbaren Öffnung versehene Abscheide für Debris ausgebildet, um beim Ausschleusen eines Molches das von diesem mitgeführte Material vorab separieren zu können. Dieses fällt schwerkraftbedingt in einen vertieften Bereich. Abscheide und Ausnehmung in der Kassette sind hierbei so zueinander angeordnet, dass die Ausnehmung in der Kassette im in die Pipeline gefahrenen Zustand der Kassette (Einsatzposition) bezüglich einer Längsachse der Pipeline auf Höhe der Abscheide ist. Etwaiges Material kann somit aus einem Bereich vor der oder den Dichtscheiben in die Abscheide fallen, wenn der Molch zum Stehen kommt.

Die eingangs gestellte Aufgabe wird ebenfalls durch eine Anordnung zum Ein- oder Ausschleusen eines Molches in eine Rohrleitung gelöst, die ein insbesondere Y- oder S-förmiges, eine Abzweigung ausbildenden Rohrleitungsstück aufweist, welches mit einem Hohlraum einen Abschnitt einer Rohrleitung ausbildet und/oder ausbilden kann, wobei eine vor- oder nachbeschriebene Vorrichtung mit Ansatzstück mit umfasst ist. Gleichzeitig ergibt sich aufgrund der erfindungsgemäßen, vor- oder nachbeschriebenen Vorrichtung, insbesondere aufgrund des Ansatzstücks, dass die Vorrichtung unter Verzicht auf eine weitere Fluid leitende Verbindung mit der Rohrleitung oder dem Rohrleitungsstück an dem Rohrleitungsstück angeschlossen oder anzuschließen ist. Aufgrund der erfindungsgemäßen Ausbildung kann auf die weitere Verbindung, d.h. die "Kicker Line", verzichtet werden. Die Integrität der Rohrleitung ist somit verbessert. Diese Vorrichtung ist insbesondere an dem Rohrleitungsstück über einen Flansch lösbar festgelegt. Insofern kann der durch im Wesentlichen das Ansatzstück ausgebildeter Teil der Anordnung in Form der vor- und nachbeschriebenen erfindungsgemäßen Vorrichtung von dem fest mit der Rohrleitung verbindbaren Teil separiert werden.

Zur Separierung kann der Innenraum des Ansatzstücks von dem Hohlraum des über zwei Endbereiche in die Rohrleitung integrierbaren Teils der Anordnung über ein Ventil trennbar sein. Ein aus dem Stand der Technik bekanntes Ventil ist durch einen entweder separaten Ansatzflansch oder integriert in das Y-Stück realisierbar.

Vorzugsweise weist der Hohlraum der Anordnung, der sich direkt zwischen den beiden zu verbindenden oder verbundenen Rohrleitungssegmenten befindet, einen verbreiterten Bereich auf, der sich im Bereich eines Adapters für die Kassette auf einen Innendurchmesser der Rohrleitung reduziert. Somit ist ein Anlagebereich für das Endstück der Kassette geschaffen, deren Innendurchmesser einem Innendurchmesser der Rohrleitung entsprechen sollte, um einen entsprechend angepassten Molch aufnehmen und in die Rohrleitung einführen zu können. Durch das Volumen der Kassette und insbesondere die Ausbildung von Strömungskanälen auf deren nach außen gerichteter Oberfläche bzw. deren äußerer Form weist die Anordnung einen etwas größeren Durchmesser auf als der Rohrleitungsbereich, in den diese Vorrichtung integriert wird. Gleichzeitig kann so ein guter Dichtbereich für die Anlage eines Mundstücks der Kassette geschaffen werden, um sowohl eine Unterbrechung der Strömung als auch eine gute Anlage zum Einführen des Molches auszubilden.

In Richtung des vom Adapter entfernten Ende des vergrößerten Hohlraums der erfindungsgemäßen Anordnung verjüngt sich der Innendurchmesser des Innenraumes vorzugsweise über einen den Strömungswiderstand wenig beeinträchtigenden zulaufenden, insbesondere konisch zulaufenden Teil.

Um gerade bei beweglichen Kassetten eine übermäßige Bewegung einzelner an einander gelenkig angeordneter gleichwohl dichtender Teile zu verhindern und somit eine Dichtung der hierdurch ausgebildeten Strömungskanäle gegeneinander weiterhin zu gewährleisten, ist im Hohlraum vorzugsweise ein Führungselement für die Kassette oder den Molch angeordnet. Hierbei kann es sich um beispielsweise eine Art Gitter oder auch lediglich einen einzelnen Steg handeln, der die Strömung im Hauptbereich der Anordnung zwischen den Rohrleitungssegmenten nur wenig beeinträchtigt.

Ein besonders einfaches Verfahren zum Einsetzen eines Molches in eine Rohrleitung sieht gemäß den vorbeschriebenen Vorrichtung je nach dem davon abhängig, ob das Ansatzstück bereits an einem Y- oder S-Stück od.dgl. bereits befestigt ist, wie folgt aus: Bei einer nicht am Y-Stück bzw. anderen Abzweig befestigten Variante kann das Ansatzstück auf Seiten des Mundstücks der Kassette eine offene Seite aufweisen. Durch einen Antrieb der Stellmittel über beispielsweise separate Hydraulikmotoren kann die Kassette über diese offene Seite ausgefahren werden. Auf der gegenüberliegenden Seite kann der Molch dann mittels eines separaten Schlittens in das Ansatzstück eingebracht werden. Nach dem Herausnehmen des Schlittens und des Verschließen des Zugangs kann über ein Rückfahren der Kassette in die Ausgangsposition der Molch in diese aufgenommen werden. Hierfür kann das entsprechend am Zugang befindliche Ende der Kassette mit einem sich verjüngenden Einlaufbereich zwecks verbesserten Einführen des Molches versehen sein. Alternativ kann beispielsweise in einer bereits am Y-Stück befestigten Position des Ansatzstücks der Molch über beispielsweise einen Gabelstapler in die Kassette gedrückt werden.

Nachdem das Ansatzstück mit dem Molch versehen ist, kann in dem Verbindungsbereich zwischen Ansatzstück und Y-Stück ein Ventil geöffnet werden, so dass die Kassette in die Einsatzposition verfahren kann. In dieser Einsatzposition wird durch eine dichtende oder quasi dichtende Anlage der Kassette bzw. deren Mundstücks an einem entsprechenden Bereich oder Adapterbereich im Hohlraum des Y- oder S-Stücks eine Umlenkung eines in der Pipeline befindlichen Mediumstromes durch die Strömungskanäle, die von der Kassette ausgebildet werden, bewirkt. Der Molch wird somit von hinten angeströmt und in die Pipeline gedrückt. Nachdem der Molch in die Pipeline gedrückt worden ist, was beispielsweise durch entsprechende Marker überwacht werden kann, kann die Kassette wieder in ihre Ausgangsposition zurückfahren. Für eine Aufnahme des Molches beim Ausschleusen aus der Rohrleitung erfolgt dann ein entsprechend umgekehrtes Vorgehen.

Alternativ kann ein Molch zum Einbringen in eine Rohrleitung neben den Dichtungsscheiben bzw. Cups auch mit aktiven Antriebsmitteln versehen sein. Insofern handelt es sich um einen aktiv und passiv bewegbaren Molch, wie er beispielsweise in der DE 10 2013 106 424 A1 beschrieben ist. Nach Öffnen eines Ventils zwischen Ansatzstück und Y- bzw. S-Stück kann der Molch über aktive Antriebsmittel in Richtung der Hauptströmung der Rohrleitung bewegt werden. In dem Moment, in dem der Molch, der im Hohlraum über entsprechende Leitmittel in die richtige Richtung geleitet wird, aufgrund seiner passiven Vortriebsmittel eine bestimmte Geschwindigkeit erreicht, können die aktiven Antriebsmittel zurückgezogen werden. Erst wenn der Molch am Ende seiner Inspektions- oder Reinigungsfahrt wieder aus der Pipeline herausgeholt werden muss, kann bei Unterschreiten einer bestimmten Geschwindigkeit eine Fortbewegung über die aktiven Antriebsmittel erfolgen. Dies gilt auch für das Ausschleusen aus der Rohrleitung, wenn der Vortrieb aufgrund mangelnder Anlage der Cups an der Wand auf passive Weise nicht mehr gewährleistet ist.

Aktive und passive Antriebsmittel sind vorzugsweise in verschiedene, insbesondere unmittelbar hintereinander folgende Molchsegmente integriert. Für eine bessere Kurvengängigkeit kann der Molch zwischen seinem aktiven und seinem passiven Antriebsteil mit einem unter Zug verlängerbaren Kupplungsteil versehen sein, so dass die beiden Antriebsteile in der Rohrleitung im passiven Antriebsmodus weiter auseinander liegen.

Weitere Vorteile und Einzelheiten der Erfindung sind der nachfolgenden Figurenbeschreibung zu entnehmen.

In den Figuren zeigt.
- Fig. 1: einen erfindungsgemäßen Gegenstand,
- Fig. 2: den Gegenstand nach Fig. 1 in einer Betriebsposition zum Einführen eines Molches,
- Fig. 3: einen Teil einer weiteren erfindungsgemäßen Anordnung,
- Fig. 4: die erfindungsgemäße Anordnung nach Fig. 3 mit Ansatzstück,
- Fig. 5: den Gegenstand nach Fig. 3 in einer weiteren Betriebsposition,
- Fig. 6: einen weiteren erfindungsgemäßen Gegenstand,
- Fig. 7: einen Teil des Gegenstands nach Fig. 6,
- Fig. 8a u. 8b: einen weiteren erfindungsgemäßen Gegenstand.

Einzelne technische Merkmale der nachbeschriebenen Ausführungsbeispiele können auch mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll, werden funktional gleichwirkende Elemente mit identischen Bezugsziffern versehen.

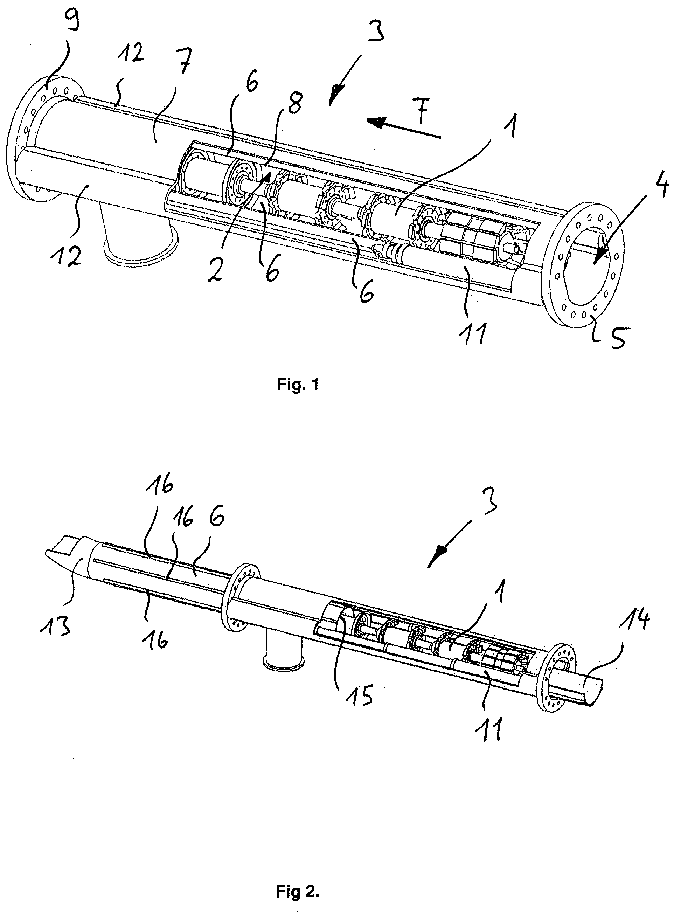

Eine erfindungsgemäße Vorrichtung zum Ein- und Ausschleusen eines Molches 1 in eine nicht näher dargestellte Rohrleitung umfasst ein einen Innenraum 2 aufweisendes Ansatzstück 3, mit einem endseitigen Zugang 4, der mit einer über einen Flansch 5 befestigbaren Abdeckung verschlossen werden kann. Über den Zugang 4 kann der Molch 1 in den Innenraum 2 und hier in eine Kassette 6 hineingeschoben werden, die in dem aufgeschnittenen Bereich der Wand 7 nach Fig. 1 erkennbar ist. Auch die Kassette selbst ist in dem aufgeschnittenen Bereich zwecks Einsichtnahme auf den in ihr befindlichen Molch in Teilen und entlang einer Schnittkante 8 aufgeschnitten. An einem mit einem Flansch 9 versehenen Ende ist ein Ausgang vorgesehen, der in Richtung einer Rohrleitung bzw. eines Hohlraums eines Y- oder S-Stücks oder einer ähnlichen Abzweigung einer Rohrleitung führen kann.

Obgleich etwaige Stellmittel 11 zum Bewegen des als Kassette 6 ausgebildeten Führungselements in Längsrichtung F sowie entgegen dieser im vorliegenden Ausführungsbeispiel in Ansätzen 12 an die Wand 7 verlaufen, können diese auch direkt innerhalb einer hohlzylindrischen dann aber mit größerem Querschnitt versehenen Vorrichtung angeordnet sein. Vorliegend dienen Stege 16 einer Abstützung der Kassette 6 an der Innenseite der Wand 7.

In Fig. 2 ist die Kassette 6 in einem ausgefahrenen Zustand dargestellt, wie er beispielsweise bei einer Beladung der Kassette mit einem Molch 1 vorliegen kann. Die Stellantriebe 11 sind ausgefahren. Die Kassette 6 weist einen Hohlkörper mit Mundstück 13 auf, der erkennbar in Umfangsrichtung, d.h. um seine Längsachse, die parallel zur Bewegungsrichtung F verläuft, herum den Molch umschließt. Das Mundstück 13 der Kassette 6 ist als Verschließteil ausgebildet, welches in Anlage mit der Wand eines Y- oder S-Stücks oder dgl. Abzweig in der Rohrleitung gelangt.

In der Fig. 2 ist der Molch über einen Schlitten 14 in den Innenraum 2 des Ansatzstücks 3 geschoben worden. Nachdem der Schlitten 14 aus dem Gehäuse entfernt wurde und der Zugang 4 verschlossen ist, wird mittels der Stellmittel 11 die Kassette 6 über den Molch 1 geschoben. Der Hauptteil der Kassette 6 ist wie in der Fig. 2 über die kreisförmige Kante 15 dargestellt, im Wesentlichen zylindrisch ausgebildet.

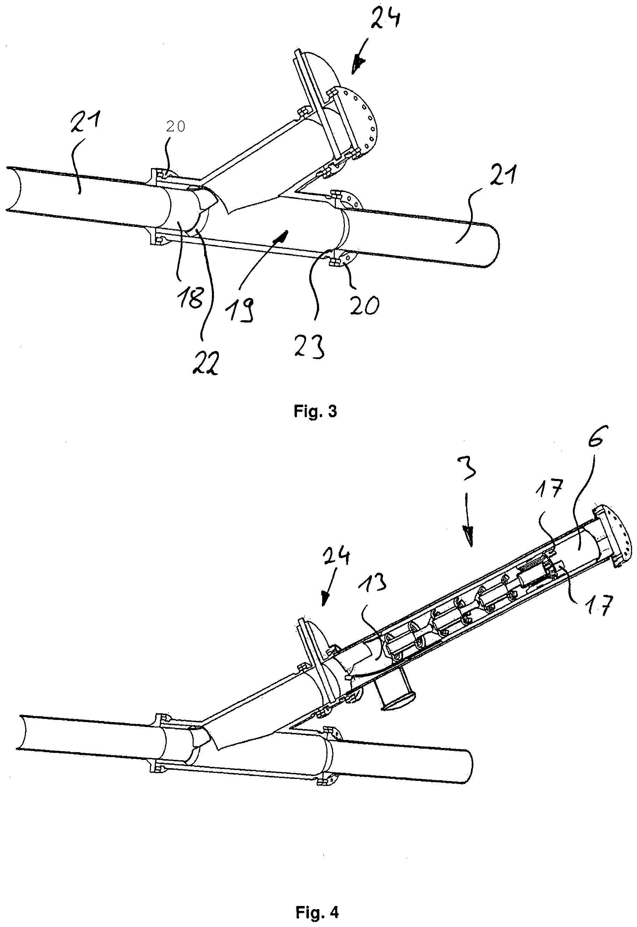

Auf ihrer nach außen gerichteten Seite bzw. Oberfläche der Wand 7 sind Stege 16 ausgebildet, die (Neben-)Strömungskanäle ausbilden. Diese sind in Umfangsrichtung nebeneinander angeordnet und umschließen bzw. begrenzen einen durch den Innenraum des Hohlzylinders (bzw. -körpers) ausgebildeten (Haupt-) Strömungskanal, in dem das Medium in umgekehrte Richtung fließt bzw. strömen kann. Umlenkbereiche in Form von Ausnehmungen 17 sind in Fig. 4 näher dargestellt. Durch die Umlenkbereiche sind der zentrale Hauptkanal und die äußeren Kanäle in Fluidkommunikation und im Betrieb während des Ein- oder Ausschleusens strömungsmäßig miteinander verbunden.

Während die Vorrichtung nach den Figuren 1 und 2 separat in verschiedenen Abzweigen einer Rohrleitung betrieben werden kann, offenbaren die Figuren 3 und 4 einen weiteren erfindungsgemäßen Gegenstand, nämlich eine Anordnung umfassend einen Ansatzstück 3 gemäß den Figuren 1 und 2 sowie einen in Form eines Y-Stücks ausgebildeten Abzweig einer Rohrleitung, der in diese über entsprechende Rohrleitungsflansche 20 integrierbar ist. In der geschnittenen Darstellung der Fig. 1 ist ein Adapter 18 erkennbar, über den ein vom Innendurchmesser her verbreiterter Hohlraum 19 in einen der weiteren Rohrleitung 21 entsprechenden Durchmesser überführt wird. Der Adapter 18 weist eine Dichtkante 22 auf, an die das Mundstück 13 eines in Fig. 3 nicht dargestellten Ansatzstückes dichtend anlegbar ist. Im Bereich des in der Fig. 3 rechten Flansches ist über eine konisch zulaufende Wand 23 ein Übergang in die stromaufwärts gelegene weitere Rohrleitung 21 realisiert. Ein Ventil 25 dient der Dichtung des Y-Stücks, wobei dieses Ventil auch nicht wie dargestellt lösbar an dem Y-Stück sondern in dieses integriert ausgeführt werden kann.

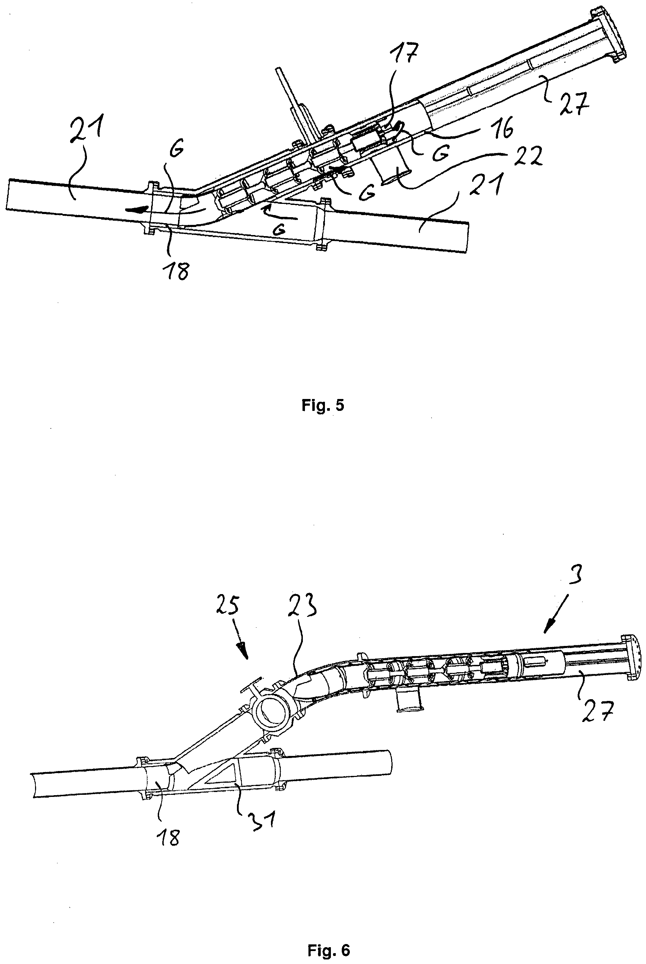

Fig. 4 zeigt die Anordnung inklusive des Ansatzstücks 3 mit einem nicht zur Erfindung gehörenden Molch. Die Kassette 6 befindet sich mit ihrem Mundstück 13 noch oberhalb des Ventils 25 und kann aus dieser Position in die in der Fig. 5 gezeigte dichtende Anlagestellung überführt werden. In dieser Position bildet das Mundstück 13 mit der Kassette 6 das Verschlussteil aus, welches den Fluss in der Rohrleitung 21 durch dichtende Anlage an dem Adapter 18 gemäß den Pfeilen G umlenkt. Insbesondere der in der Figur obere rechte Pfeil G verdeutlicht den Fluss durch die Ausnehmungen 17 in den zentralen Strömungskanal, durch den dann die stromaufwärts und stromabwärts gelegenen Teile der Rohrleitung strömungsmäßig miteinander verbunden werden. Die Höhe der Stege 16 und mithin der Durchmesser des Ansatzstücks 3 ist hierbei so dimensioniert, dass die Strömung möglichst wenig blockiert wird. Entsprechend ist auch die Dimensionierung des Hohlraums 19 vorzunehmen. Durch die Strömung G wird der Molch dann in die stromabwärts gelegene Rohrleitung 21 eingeschleust. Auf eine Kicker-Line kann verzichtet werden. Die Rohrleitung ist nicht zusätzlich zu öffnen und die Prozesssicherheit des Einschleus- und entsprechend auch das Ausschleusvergangs sind erhöht. Etwaiger während der eines Reinigungsvorgangs vorangetriebener Debris kann in einer auf der Unterseite des Ansatzstücks 3 vorhandenen Abscheide 22 gesammelt werden.

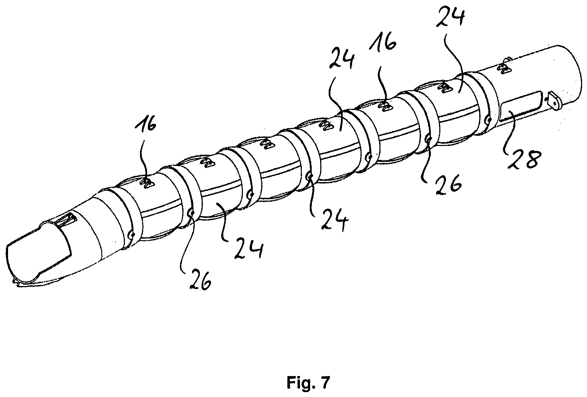

In dem weiteren in einem Vertikalschnitt dargestellten Ausführungsbeispiel gemäß Fig. 6 ist das Ansatzstück mit einem gebogenen Teilabschnitt 23 versehen. Dies ist vorteilhaft für eine parallele Ausrichtung des eigentlichen Ansatzstücks 3 in Richtung parallel zur Rohrleitung. Der Platzbedarf wird somit minimiert. Um eine Überführung der nach den bisherigen Ausführungsbeispielen starren Kassette in die Anlageposition innerhalb des Y-Stücks und an dem Adapter 18 zu gewährleisten, ist die Kassette nunmehr mit einer Reihe von in Fig. 7 dargestellten hohlen Kassettenstücken 24 ausgebildet. Diese sind dichtend aneinander angeordnet. Die Kugel- bzw. Führungsgelenke, die an den Positionen 26 angedeutet sind, erlauben die Relativbewegung der Kassettenstücke 24 in einer Ebene und sind ebenfalls abgedichtet, so dass über auf der Außenseite vorhandene Stege 16 eine Beabstandung von einer Innenwand 27 (vgl. Fig. 5 und Fig. 6) des Ansatzstücks 3 erfolgt. Hierdurch werden die (Neben-) Strömungskanäle ausgebildet. Als Absperrventil kommt ein Kugelventil zum Einsatz. Ein Führungselement 31 verhindert ein zu starkes Abklappen des Mundstücks, welches gelenkig an dem Rest der Kassette 6 gelagert ist.

Ausnehmungen 28 stellen Umlenkbereiche aus dem Hauptströmungskanal im Inneren der Kassette und den äußeren Neben-Strömungskanälen dar.

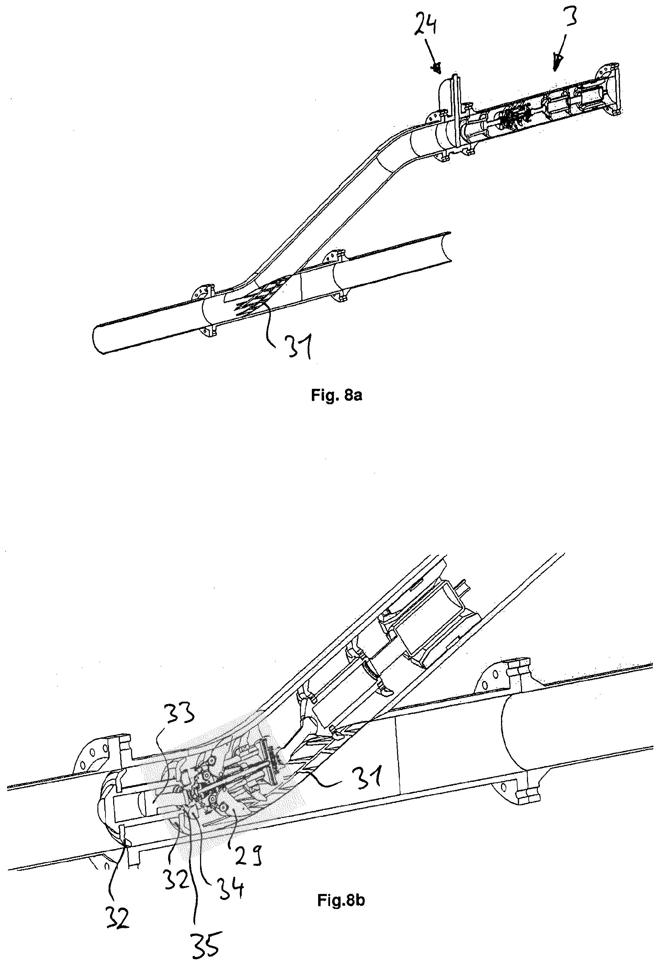

In einem weiteren Ausführungsbeispiel einer Erfindung ist ein alternativer Ansatz zum Ein-und Ausschleusen eines Molches in eine Pipeline offenbart. Hierbei ist ein Ansatzstück mit einem aktiv und passiv betreibbaren Molch versehen. Bei Öffnen des Ventils 25 kann der Molch über Aktiv-Antriebsmittel 29 und entlang einer in dem Y- bzw. S-Stück vorhandenen gitterförmigen Führung 31 soweit in die Rohrleitung oder in den Hauptströmungskanal der Rohrleitung einfahren, bis ein Vortrieb über Dichtscheiben bzw. Cups 32 (vgl. Fig. 8a und 8b) ermöglicht wird. In diesem Fall fahren dann die Aktiv-Antriebsmittel 29 ein und der Molch wird passiv durch die Leitung bewegt. Für den Fall des Ausschleusens aus der Rohrleitung wird der Molch dann entlang des Führungselements 31 soweit in Richtung des Ansatzstücks 3 geschoben, wie der passive Vortrieb erfolgt. Bei Unterschreiten einer bestimmten Geschwindigkeit kann dann über die aktiven Antriebsmittel 29 der Molch in seine Ausgangsstellung in dem Ansatzstück 3 hineinbewegt werden.

Die aktiven Antriebsmittel 29 sind in einem eigenen, von dem voraus angeordneten Zugsegment separaten Segment angeordnet. Beide Segmente sind über einen Kolben 33 miteinander verbunden. Dieser ist längsbeweglich in dem Zugelement angeordnet und in der in Fig. 8b gezeigten Position im durch das Drücken der aktiven Antriebsmittel 29 eingeschobenen Zustand. Für eine definierte Anlage des zweiten Molchsegments mit den aktiven Antriebsmitteln 29 an dem ersten Antriebselement weist dieses ein vorzugsweise ringförmiges Stoßstück 34 auf. Sofern die vordere Zugeinheit durch den anstehenden Mediendruck den Antrieb übernimmt, verlängert sich der Abstand zum zweiten Segment solange, bis der Kopf des Kolbens an einer rückseitigen Schulter 35 anliegt und das Tool weist ein gute Bogengängigkeit auf.

## Patentansprüche

1. Vorrichtung zum Ein- und Ausschleusen eines Molches (1) in eine oder aus einer Rohrleitung (21), umfassend ein einen Innenraum (2) aufweisendes Ansatzstück (3) mit einem endseitigen Zugang (4) in den Innenraum (2) und einem in Richtung der Rohrleitung oder in diese führenden Ausgang, wobei der Innenraum in Fluidkommunikation mit der Rohrleitung bringbar ist und wobei in dem Innenraum ein in Längsrichtung (F) des Ansatzstücks (3) und in dem Innenraum (2) bewegbares Führungselement zur Aufnahme des Molches (1) angeordnet ist,**dadurch gekennzeichnet, dass** in dem Innenraum (2) ein in Längsrichtung des Führungselements laufender Strömungskanal sowie wenigstens ein entgegen dieser Richtung verlaufender weiterer Strömungskanal ausgebildet sind, die über zumindest einen Umlenkbereich miteinander verbunden sind und durch Überführung eines Verschlussteils in eine Einsatzposition in Fluidkommunikation mit einem in der Rohrleitung (21) befindlichen Medium gelangen können.

2. Vorrichtung nach Anspruch 1, **dadurch gekennzeichnet, dass** das Führungselement als Kassette (6) ausgebildet ist, die betrachtet in Längsrichtung des Führungselements einen in Umfangsrichtung geschlossenen Hohlkörper ausbildet.

3. Vorrichtung nach Anspruch 2, **dadurch gekennzeichnet, dass** die Kassette (6) einen zentralen Aufnahmebereich ausbildet, in dem der Molch an einer Innenwand des Hohlkörpers dicht angeordnet werden kann.

4. Vorrichtung nach Anspruch 2 oder 3, **dadurch gekennzeichnet, dass** insbesondere die Kassette (6) die Strömungskanäle ausbildet.

5. Vorrichtung nach Anspruch 4, **dadurch gekennzeichnet, dass** das Verschlussteil durch die Kassette (6) oder ein an dieser befestigtes Ventilteil ausgebildet ist.

6. Vorrichtung nach einem der Ansprüche 4 oder 5, **dadurch gekennzeichnet, dass** die beiden Strömungskanäle quer zur Längsachse des Ansatzstücks (3) nebeneinander liegen.

7. Vorrichtung nach einem der Ansprüche 4 bis 6, **dadurch gekennzeichnet, dass** die Kassette (6) auf ihrer nach außen gerichteten Seite Stege (16) oder Wandabschnitte aufweist, über die zumindest einer der Strömungskanäle ausgebildet wird.

8. Vorrichtung nach einem der Ansprüche 4 bis 7, **dadurch gekennzeichnet, dass** der Umlenkbereich durch wenigstens eine Ausnehmung (17) der Kassette (6) ausgebildet wird, die insbesondere in einer zum Zugang (4) gerichteten Hälfte der Kassette (6) angeordnet ist.

9. Vorrichtung nach einem der Ansprüche 2 bis 8, **dadurch gekennzeichnet, dass** zur Bewegung der Kassette (6) zumindest ein vorzugsweise als Hydraulikzylinder ausgebildetes Stellmittel (11) vorgesehen ist.

10. Vorrichtung nach einem der vorherigen Ansprüche, **dadurch gekennzeichnet, dass** die Kassette (6) eine Mehrzahl von gelenkig aneinander angeordneten Kassettenstücken (24) aufweist.

11. Vorrichtung nach einem der Ansprüche 1 bis 10, **dadurch gekennzeichnet, dass** auf einer Unterseite des Ansatzstücks (3) eine vorzugsweise öffnungsfähige Abscheide (22) für Debris ausgebildet ist.

12. Anordnung zum Ein- oder Ausschleusen eines Molches in eine Rohrleitung, mit einem vorzugsweise Y- oder S-förmigen, eine Abzweigung ausbildenden Rohrleitungsstück, welches mit einem Hohlraum (19) einen Abschnitt einer Rohrleitung (21) ausbilden kann, **gekennzeichnet durch** eine Vorrichtung nach einem der vorherigen Ansprüche, wobei die Vorrichtung unter Verzicht auf eine weitere Fluid leitende Verbindung mit der Rohrleitung oder dem Rohrleitungsstück an dem Rohrleitungsstück angeschlossen oder anzuschließen ist.

13. Anordnung nach Anspruch 12, **dadurch gekennzeichnet, dass** die Vorrichtung an dem Rohrleitungsstück über einen Flansch lösbar festgelegt ist.

14. Anordnung nach Anspruch 12 oder 13, **dadurch gekennzeichnet, dass** der Innenraum (2) des Ansatzstücks (3) von dem Hohlraum (19) des mittels zweier Endbereiche in die Rohrleitung integrierbaren Teils der Anordnung über ein Ventil (25) trennbar ist.

15. Anordnung nach Anspruch 14, **dadurch gekennzeichnet, dass** der Hohlraum (19) einen verbreiterten Bereich aufweist, der sich im Bereich eines Adapters (18) für die Kassette (6) auf einen Innendurchmesser der Rohrleitung (21) reduziert.

16. Anordnung nach einem der Ansprüche 12 bis 15, **dadurch gekennzeichnet, dass** im Hohlraum (19) ein Führungselement (31) für die Kassette (6) oder den Molch (1) angeordnet ist.

## Claims

1. Device for loading and unloading a pig (1) into or out of a pipeline (21), said device comprising an attachment piece (3) which has an inner chamber (2) and an end-face access point (4) into the inner chamber (2) and an outlet leading in the direction of the pipeline or into said pipeline, it being possible to bring the inner chamber into fluid communication with the pipeline, and a guide element for receiving the pig (1) being arranged in the inner chamber (2), which guide element is movable in the longitudinal direction (F) of the attachment piece (3) and in the inner chamber (2), **characterised in that** a flow channel, extending in the longitudinal direction of the guide element, and at least one additional flow channel, extending counter to this direction, are formed in the inner chamber and are interconnected by at least one deflection region, and can achieve fluid communication with a medium in the pipeline (21) by transferring a closure part into a use position.

2. Device according to claim 1, **characterised in that** the guide element is in the form of a cartridge (6) which, when viewed in the longitudinal direction of the guide element, forms a hollow body which is closed in the circumferential direction.

3. Device according to claim 2, **characterised in that** the cartridge (6) forms a central receiving region in which the pig can be arranged in a tight-fitting manner on an inner wall of the hollow body.

4. Device according to either claim 2 or claim 3, **characterised in that** in particular the cartridge (6) forms the flow channels.

5. Device according to claim 4, **characterised in that** the closure part is formed by the cartridge (6) or a valve part fastened thereto.

6. Device according to either claim 4 or claim 5, **characterised in that** the two flow channels are positioned next to one another so as to be transverse to the longitudinal axis of the attachment piece (3).

7. Device according to any of claims 4 to 6, **characterised in that** the cartridge (6) comprises, on its outwardly oriented face, ribs (16) or wall portions, by means of which at least one of the flow channels is formed.

8. Device according to any of claims 4 to 7, **characterised in that** the deflection region is formed by at least one recess (17) in the cartridge (6), which recess is arranged in particular in a half of the cartridge (6) oriented towards the access point (4).

9. Device according to any of claims 2 to 8, **characterised in that** at least one adjustment means (11), preferably in the form of a hydraulic cylinder, is provided for moving the cartridge (6).

10. Device according to any of the preceding claims, **characterised in that** the cartridge (6) comprises a plurality of cartridge pieces (24) which are arranged next to one another so as to be articulated.

11. Device according to any of claims 1 to 10, **characterised in that** a preferably openable separator (22) for debris is arranged on the underside of the attachment piece (3).

12. Assembly for loading or unloading a pig into a pipeline, which has a preferably Y-shaped or S-shaped pipeline piece that forms a branch and, together with a hollow chamber (19), can form a portion of a pipeline (21), **characterised by** a device according to any of the preceding claims, the device being attached or it being possible to attach the device to the pipeline piece without using an additional fluid-conveying connection to the pipeline or the pipeline piece.

13. Assembly according to claim 12, **characterised in that** the device is detachably fixed to the pipeline piece by means of a flange.

14. Assembly according to either claim 12 or claim 13, **characterised in that** the inner chamber (2) of the attachment piece (3) can be isolated by a valve (25) from the hollow chamber (19) of the part of the assembly which can be integrated in the pipeline by means of two end regions.

15. Assembly according to claim 14, **characterised in that** the hollow chamber (19) has a widened region which reduces to an inner diameter of the pipeline (21) in the region of an adapter (18) for the cartridge (6).

16. Assembly according to any of claims 12 to 15, **characterised in that** a guide element (31) for the cartridge (6) or the pig (1) is arranged in the hollow chamber (19).

## Revendications

1. Dispositif d'insertion d'un écouvillon (1) dans une canalisation (21) et de sortie dudit écouvillon de ladite canalisation, le dispositif comprenant un embout (3) pourvu d'un espace intérieur (2), d'un accès côté extrémité (4) à l'espace intérieur (2) et d'une sortie en direction de la canalisation ou menant dans celle-ci,
l'espace intérieur étant en communication fluidique avec la canalisation et un élément de guidage mobile dans la direction longitudinale (F) de l'embout (3) et à l'espace intérieur (2) étant disposé dans l'espace intérieur pour recevoir l'écouvillon (1), **caractérisé en ce qu'**un conduit d'écoulement s'étendant dans la direction longitudinale de l'élément de guidage et au moins un autre conduit d'écoulement s'étendant à l'opposé de cette direction étant formés dans l'espace intérieur (2), lesquels conduits sont reliés l'un à l'autre par au moins une région de déviation et peuvent venir en communication fluidique avec un milieu, situé dans la canalisation (2), par transfert d'un élément de fermeture dans une position d'insertion.

2. Dispositif selon la revendication 1, **caractérisé en ce que** l'élément de guidage est conçu sous la forme d'une cassette (6) qui forme, en référence à la direction longitudinale de l'élément de guidage, un corps creux fermé dans la direction périphérique.

3. Dispositif selon la revendication 2, **caractérisé en ce que** la cassette (6) forme une zone de réception centrale dans laquelle l'écouvillon peut être disposé de manière étanche au niveau d'une paroi intérieur du corps creux.

4. Dispositif selon la revendication 2 ou 3, **caractérisé en ce que** la cassette (6) forme notamment les conduits d'écoulement.

5. Dispositif selon la revendication 4, **caractérisé en ce que** l'élément de fermeture est formée par la cassette (6) ou un élément formant valve fixé à celle-ci.

6. Dispositif selon l'une des revendications 4 ou 5, **caractérisé en ce que** les deux conduits d'écoulement sont placés l'un à côté de l'autre transversalement à l'axe longitudinal de l'embout (3).

7. Dispositif selon l'une des revendications 4 à 6, **caractérisé en ce que** la cassette (6) comporte sur son côté orientée vers l'extérieur des nervures (16) ou par des parties de paroi qui forment au moins un des conduits d'écoulement.

8. Dispositif selon l'une des revendications 4 à 7, **caractérisé en ce que** la région de déviation est formée par au moins un évidement (17) de la cassette (6) qui est disposé notamment dans une moitié de la cassette (6) qui est dirigée vers d'accès (4).

9. Dispositif selon l'une des revendications 2 à 8, **caractérisé en ce qu'**au moins un moyen de commande (11), conçu comme un cylindre hydraulique, est prévu pour déplacer la cassette (6).

10. Dispositif selon l'une des revendications précédentes, **caractérisé en ce que** la cassette (6) comporte une pluralité de pièces de cassette (24) disposées de manière articulée les unes avec les autres.

11. Dispositif selon l'une des revendications 1 à 10, **caractérisé en ce qu'**un séparateur (22) pouvant de préférence s'ouvrir, (22) et destinés à des débris est formé sur un côté inférieur de l'embout (3).

12. Ensemble d'insertion d'un écouvillon (1) dans une canalisation (21) et de sortie dudit écouvillon de ladite canalisation, ledit ensemble comprenant une section de canalisation de préférence en forme de Y ou de S qui forme une dérivation et qui peut former avec une cavité (19) une partie d'une canalisation (21), **caractérisé par** un dispositif selon l'une des revendications précédentes, le dispositif étant relié ou devant être relié à la section de canalisation sans avoir recours à une autre liaison de communication fluidique avec la canalisation ou la section de canalisation.

13. Ensemble selon la revendication 12, **caractérisé en ce que** le dispositif est fixé de manière amovible à la section de canalisation par le biais d'une bride.

14. Ensemble selon la revendication 12 ou 13, **caractérisé en ce que** l'espace intérieur (2) de l'embout (3) peut être séparé, par le biais d'une vanne (25), de la cavité (19) de la partie de l'ensemble qui peut intégrée dans la canalisation au moyen de deux régions d'extrémité.

15. Ensemble selon la revendication 14, **caractérisé en ce que** la cavité (19) comporte une région élargie qui se réduit à un diamètre intérieur de la canalisation (21) dans la région d'un adaptateur (18) destiné à la cassette (6).

16. Ensemble selon l'une des revendications 12 à 15, **caractérisé en ce qu'**un élément de guidage (31) destiné à la cassette (6) ou à l'écouvillon (1) est disposé dans la cavité (19) .
